# EUROPÄISCHE PATENTSCHRIFT

(11) **EP 3 104 099 B1**
(45) Veröffentlichungstag und Bekanntmachung des Hinweises auf die Patenterteilung: **12.09.2018**
(21) Anmeldenummer: 16173118.7
(22) Anmeldetag: 06.06.2016
(51) Int. Cl.: F24S 40/46, E04B 1/80

(54) **Shaltbares Vakuumdämmelement**
Switchable vacuum insulation element
Élément d'isolation sous vide commutable

(30) Priorität: 08.06.2015 DE 102015007085
(43) Veröffentlichungstag der Anmeldung: 14.12.2016
(73) Patentinhaber: SAINT-GOBAIN ISOVER G+H AG, 67059 Ludwigshafen (DE); Bayerisches Zentrum für angewandte Energieforschung e.V. (ZAE Bayern), 97074 Würzburg (DE); va-Q-tec AG, 97080 Würzburg (DE)
(72) Erfinder: Römer, Constantin, 91301 Forchheim (DE); Wachtel, Johannes, 97816 Lohr am Main (DE); Passon, Ulrich, 76227 Karlsruhe (DE); Schumm, Michael, 69168 Schriesheim (DE); Caps, Roland, 63839 Kleinwallstadt (DE); Beyrichen, Hermann, 97072 Würzburg (DE)
(74) Vertreter: Winter, Brandl, Fürniss, Hübner, Röss, Kaiser, Polte - Partnerschaft mbB

(56) Entgegenhaltungen:
- EP-A2- 0 434 226
- DE-A1- 19 647 567
- DE-A1-102008 023 841
- US-A- 5 018 328
- US-A1- 2014 178 626

## Beschreibung

Die Erfindung betrifft ein schaltbares Vakuumdämmelement nach Anspruch 1, insbesondere zum Einsatz für solare Energienutzung.

Vor dem Hintergrund steigender Energiekosten und zunehmender gesetzlicher Anforderungen kommt der Steigerung der Energieeffizienz von Gebäuden eine Schlüsselrolle zu. Zu diesem Zweck kommen sowohl im Rahmen des Neubaus als auch bei der Altbausanierung vermehrt dämmtechnisch optimierte Bauelemente wie Fenster, Türen und dergleichen sowie verbesserte Dämmungen der Wände, Fassaden und Dächer zum Einsatz. Dies führt häufig bei Wand- und Fassadenelementen zu immer größer werdenden Dicken der Aufbauten, um den gesetzlichen Anforderungen der Dämmwirkung gerecht zu werden. Abhilfe schaffen hier Vakuumisolationspaneele, kurz VIP genannt. Aufgrund der durch die Evakuierung fast vollständig unterdrückten Wärmeleitung durch ein Gas im Inneren dieser Systeme sind im Vergleich zu nicht-evakuierten Dämmungen deutlich schlankere Dämmelemente mit wesentlich geringerer Wärmleitfähigkeit möglich. Alle diese Maßnahmen reduzieren den Wärmestrom aus dem Gebäude in die Umgebung während der Heizperiode.

In Ergänzung zu diesen passiven Maßnahmen zur Verringerung des Wärmeverlustes wurden in der Vergangenheit verschiedene Systeme vorgeschlagen, mit denen solare Energieeinträge genutzt und in die Innenräume abgegeben werden können. Neben passiven Systemen wurden auch aktiv schaltbare Dämmelemente entwickelt. Während der Heizperiode sollen diese Systeme bei ungenügendem Solarenergieangebot eine hocheffektive Wärmedämmung zur Verfügung zu stellen, und im Fall eines nutzbaren Solarenergieangebots wärmedurchlässig wirken.

Für diesen Zweck sind insbesondere schaltbare VIP geeignet. Vakuumdämmungen mit einem evakuierten Kern, z. B. auf der Basis eines Glasfasermaterials, der von einer gasdichten Hülle umgeben ist, sind bekannt. Weiterhin sind im Stand der Technik verschiedene Systeme beschrieben, in denen der Druck im Inneren eines VIP durch an dieses angeschlossene Pumpen geregelt werden kann, sodass die Wärmeleitfähigkeit des VIP definiert eingestellt werden kann.

US 5,433,056 offenbart ein Vakuumdämmelement, bei dem der Gesamtgasdruck im Inneren mit Hilfe von Wasserstoffgas geregelt werden kann, welches in einem geeigneten Gettermaterial gebunden ist. Durch Erhitzung des Getters kann das Wasserstoffgas freigesetzt werden und wird nach dem Abkühlen des Getters wieder reversibel aufgenommen.

DE 196 47 567 entwickelt das Konzept der US 5,433,056 weiter und schlägt vor, das Gettermaterial mit einer elektrischen Widerstandsheizung zu beheizen, die mit dem Gettermaterial im Kernmaterial angeordnet ist. Zur Verringerung der Energieverluste sowie zum Schutz des den Getter umgebenden Kernmaterials ist eine Isolierung zwischen Gettermaterial und umgebenden Kernmaterial vorgesehen.

DE 196 47 567 macht zu dem Material der gasdichten Umhüllung keine weiteren Angaben. Dem Fachmann bekannt und in der Literatur beschrieben sind Umhüllungen auf der Basis von Edelstahl. Zwar weisen diese verschweißten kastenartigen Umhüllungen einen sehr hohen Gasdiffusionswiderstand aus, nachteilig an ihnen sind jedoch der hohe Preis und die vergleichsweise große Wärmebrücke über die Verbindungsflächen, die die Dämmwirkung des VIP deutlich herabsetzt. Gerade dieser negative Effekt hat dazu geführt, dass Edelstahlumhüllungen in der Praxis nur noch eine untergeordnete Bedeutung haben.

Zum Praxisstandard für das Umhüllungsmaterial haben sich in den letzten Jahren mehrschichtige Verbundfolien entwickelt. Diese bestehen aus einem mindestens zweischichtigen Verbundaufbau aus einer Metallschicht, meistens aus Aluminium und einer Kunststoffschicht gebildet sind, die als Siegelschicht dient. Üblicherweise weisen diese Folien noch eine weitere Verstärkungsschicht aus einem Kunststoffmaterial auf, die außenseitig auf der Metallschicht angebracht ist und die Folienumhüllung gegen mechanische Einwirkungen schützen soll. Neben diesen Zwei- oder Dreischicht-Verbundfolien sind auch noch mehrschichtige Verbundfolien bekannt, in denen sich die Schichtabfolge Metallschicht und Kunststoffschicht mehrmals wiederholen kann. Der wesentliche Vorteil dieser nachfolgend unter dem Begriff Verbundfolien zusammengefassten Umhüllungsmaterialien besteht darin, dass der Wärmebrückeneffekt gegenüber den Edelstahlumhüllungen signifikant verringert ist.

Um Nutzungszeiten über übliche Sanierungszyklen oder Standzeiten von Gebäuden von bis zu etwa 30 Jahren für VIP zu erhalten, muss bei VIP-Elementen eine Erhöhung des Innendrucks soweit wie möglich reduziert werden. Im Gegensatz zu Glas- oder Edelstahlumhüllten VIP stellt bei Verbundfolien die deutlich höhere Gasdiffusion durch die Folien in den evakuierten Kern ein Problem dar. Bei konstantem Diffusionskoeffizienten nimmt die Druckdifferenz zwischen Umgebungsdruck und Gesamtgasdruck im Inneren des Paneels einen unvorteilhaften Einfluss auf die Größe des Diffusionsstroms und somit auf die daraus resultierende Wärmeleitfähigkeit des VIP.

Zur Lösung dieser Problematik wird in DE 10 2008 023 838 ein VIP in den Kern eines zweiten VIP-Elements eingefügt, sodass die eindiffundierende Luft nicht eine, sondern zwei Barriereschichten überwinden muss, womit der Anstieg des Innendruck entsprechend reduziert wird. In DE 10 2008 023 841 wird ebenfalls ein VIP-Element in den Kern eines VIP-Elements eingefügt, nur hier wird die äußere Füllkammer mit einem Füllgas mit geringer Wärmeleitfähigkeit bei einem gewissen Unterdruck gefüllt. Durch diese Druckdifferenz zwischen Atmosphäre, äußerer Füllkammer und innenliegendem VIP reduziert sich der effektive Diffusionsstrom. Sowohl in DE 10 2008 023 838 als auch in der DE 10 2008 023 841 ist auch das äußere Dämmelement auf eine gute Dämmwirkung ausgelegt.

Ein Nachteil der Verwendung von Wasserstoffgas zum Regeln des VIP nach US 5,433,056 oder DE 196 47 567 besteht darin, dass nicht nur ein Diffusionsstrom der umgebenden Atmosphäre in den Kern des VIP, sondern auch während der Flutung eine Diffusion des Wasserstoffs aus dem Kern in die Umgebung erfolgt. Das VIP gibt im Lauf der Zeit Wasserstoff an die Umgebung ab, worunter langfristig die Schaltbarkeit leidet. Aufgrund der Tatsache, dass Wasserstoff das kleinste Gasmolekül ist, ist dieser Effekt gerade bei den Verbundfolien besonders ausgeprägt.

Ausgehend von diesem Stand der Technik liegt der Erfindung die Aufgabe zu Grunde, ein Vakuumdämmelement bereitzustellen, welches die beschriebenen Nachteile überwindet und eine langfristige Schaltbarkeit bereitstellt.

Die Aufgabe wird durch ein schaltbares Vakuumdämmelement mit den Merkmalen des Anspruchs 1 gelöst. Bevorzugte Weiterbildungen der Erfindung sind durch die in den Unteransprüchen enthaltenen Merkmale gekennzeichnet.

Das erfindungsgemäße Vakuumdämmelement mit einer inneren Füllkammer in Form eines gasdicht umhüllten und evakuierten, grobporösen oder grob strukturierten Dämmmaterials weist eine variabel schaltbare Wärmeleitfähigkeit auf. Innerhalb der inneren Füllkammer mit zwei gegenüberliegenden Großflächen und vier die Großflächen verbindenden Seitenflächen befindet sich ein zur Absorption und Desorption von Wasserstoff geeignetes, elektrisch beheizbares Gettermaterial, das von einem Wärmeisolationsmaterial umschlossen ist, und das Dämmmaterial bei Bedarf mit Wasserstoffgas fluten kann. Die erste Umhüllung mitsamt Dämmmaterial und elektrisch beheizbarem Gettermaterial wird nachfolgend auch als inneres VIP bezeichnet. Das innere VIP ist von einer weiteren, zweiten Umhüllung vollflächig umgeben. Auf einer oder beiden außenseitigen Großflächen des inneren VIP bzw. der ersten Umhüllung ist ein offenporiges äußeres Füllmaterial angeordnet, welches mit der zweiten Umhüllung und dem inneren VIP eine oder zwei äußere Füllkammern ausbildet.

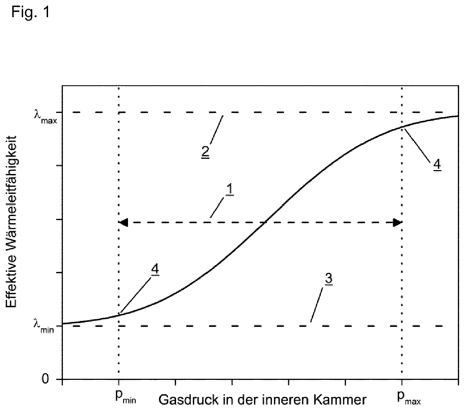

Die innere Füllkammer ist mit einem grobporösen oder grob strukturierten Dämmmaterial mit einem Porendurchmesser von 10 µm bis 1 mm, wie beispielsweise bei einem Glasfasermaterial gefüllt. Bei der Herstellung des erfindungsgemäßen Vakuumdämmelements wird bei absorbierendem Getter in der inneren Füllkammer ein Gesamtgasdruck kleiner 0,05 mbar eingestellt. Der Füllgrad bzw. die freigesetzte Menge an Wasserstoff bei desorbiertem Getter wird in Abhängigkeit von Struktur und Porengröße des Füllmaterials so gewählt, dass sich ein Innendruck einstellt, bei dem gerade die Gaswärmeleitung durch den Wasserstoff voll ausgebildet ist. Die Lage der typischen Sigmoid-Kurve eines gasdruckabhängigen porösen Dämmmaterials, siehe Fig. 1, ist unter anderem abhängig von der Porengröße und -struktur. Der erfindungsgemäß interessante Schaltbereich 1 liegt 2 % bis 10 % unterhalb der Asymptote 2 der maximalen effektiven Wärmeleitfähigkeit und 2 % bis 10 % oberhalb der Asymptote 3 der minimalen effektiven Wärmeleitfähigkeit. Da sich die effektive Wärmeleitfähigkeit ab 4 oberhalb bzw. unterhalb der gewählten 2 % nicht mehr maßgeblich ändert, sind diese äußeren Grenzen des Schaltbereiches für ein effektiv arbeitendes schaltbares, erfindungsgemäßes VIP ausreichend. Die effektive Wärmeleitfähigkeit des inneren VIPs erhöht sich innerhalb des Schaltbereiches um etwa das 50-fache.

Die äußere Füllkammer/n weist/weisen einen Gesamtgasdruck auf, der größer oder gleich dem Gesamtgasdruck im inneren VIP bei absorbierendem Getter und kleiner als der Umgebungsdruck außerhalb des Paneels ist. Der Gesamtgasdruck in der äußeren Füllkammer kann bevorzugt zwischen 0,01 bar und 0,5 bar betragen, besonders bevorzugt ist ein Gesamtgasdruck in der äußeren Füllkammer von 0,05 bar bis 0,2 bar. Diese Maßnahme führt zu einer Reduzierung der Diffusionsströme in das innere und das äußere VIP und somit zu einer Erhöhung der Nutzungsdauer des erfindungsgemäßen schaltbaren VIP. Die äußere Füllkammer stellt über die beiden Großflächen eine zusätzliche Barriere für den Diffusionsstrom aus der Atmosphäre in das innere VIP dar.

Es ist bevorzugt, dass die erste und die zweite Umhüllung im Bereich der Seitenflächen thermisch entkoppelt sind. Besonders bevorzugt ist eine Entkoppelung durch ein diffusionshemmendes in diesen Seitenflächen angeordnetes wärmedämmendes Entkoppelungsmaterial. Vorteilhaft können durch diese Entkopplung Wärmebrückeneffekte zwischen der ersten und der zweiten Umhüllung reduziert werden, weiterhin können Diffusionsströme zwischen den äußeren Füllkammern reduziert werden. Geeignete Entkoppelungsmaterialien sind beispielsweise geschlossenzellige Schäume (EPS, XPS, PUR, PIR), mikroporöse Fasermaterialien oder Pulver.

Es ist bevorzugt, dass die äußere bzw. äußeren Füllkammer/n einen Wärmedurchgangskoeffizienten gemäß EN ISO 6946 größer 2 W/m²/K aufweist/aufweisen. Damit wird eine äußere Füllkammer bereitgestellt, die nur eine geringe Dämmwirkung aufweist, so dass die schaltbare Wärmedämmung im Wesentlichen unmittelbar auf der Änderung des Wärmedurchgangskoeffizienten des inneren VIP durch die Flutung mit Wasserstoffgas beruht. Insbesondere vor dem bevorzugten Einsatz für die solare Energienutzung ist ein zusätzlicher Wärmewiderstand nicht von Vorteil. Das äußere Füllmaterial ist ein grobporöses oder grob strukturiertes Material. Als Füllmaterial eignet sich ein wärmeleitendes Material wie beispielsweise Metall- oder Carbonfasern oder metallisierte Fasern. Alternativ kommen Mineralfaser-, Mineralwoll- oder Kunststofffaservliese in Betracht. Die Dicke einer äußeren Füllmaterialschicht liegt vorzugsweise im Bereich von 1 mm bis 5 mm.

Weiterhin ist bevorzugt, dass die äußere Füllkammer teilweise mit Wasserstoff gefüllt ist. Neben der mit der Füllung mit Wasserstoff einhergehenden hohen Wärmeleitung folgt aus der reduzierten Wasserstoff-Partialdruckdifferenz zwischen den beiden Kammern zugleich eine besonders effektive Barriere für den Diffusionsstrom von Wasserstoff aus dem inneren VIP in die äußere Füllkammer.

Besonders bevorzugt liegt der Wasserstoff-Partialdruck in der äußeren Füllkammer unterhalb dem Wasserstoff-Partialdruck in der inneren Füllkammer bei vollständig desorbiertem Wasserstoff. Dies führt zu einem wechselnden Partialdruckgradienten des Wasserstoffes zwischen innerer und äußerer Füllkammer und somit zu richtungswechselnden Wasserstoff-Diffusionsströmen zwischen den beiden Füllkammern. Bei entladenem Getter (desorbiertem Wasserstoff) stellt sich ein Wasserstoff-Diffusionsstrom von Innen nach Außen und bei beladenem Getter (absorbierter Wasserstoff) von Außen nach Innen ein, womit der effektive Diffusionsstrom des Wasserstoffes durch die äußere Umhüllung deutlich reduziert wird.

Die Menge an Gettermaterial bzw. die an dem Gettermaterial gebundene Menge an Wasserstoffgas in der inneren Kammer wird so bemessen, dass sich im Zustand der Desorption bei Beheizung des Gettermaterials ein Wasserstoff-Partialdruck im inneren VIP von etwa 10 mbar bis 50 mbar einstellt. Bevorzugt beträgt der Wasserstoff-Partialdruck der äußeren Füllkammer zwischen 5 mbar und 30 mbar. Damit wird die Wasserstoff-Gasdiffusion aus der äußeren Füllkammer in das innere VIP im wärmedämmenden Zustand (beladener Getter = absorbierter Wasserstoff) des Paneels aufgrund des kleinen an der Barriere anliegenden Partialdruck-Gradienten wirkungsvoll reduziert.

Vorzugsweise wird in der äußeren Füllkammer ein Wasserstoffgas-Partialdruck eingestellt, der dem Mittelwert aus dem Wasserstoff-Partialdruck im wärmedämmenden Schaltzustand und aus dem Wasserstoff-Partialdruck im wärmeleitenden Schaltzustand im inneren VIP entspricht. Dadurch verlaufen die Diffusionsströme in den beiden Schaltzuständen gegenläufig und heben sich somit zu mindestens teilweise auf, woraus eine besonders hohe Ausgangsgasdruckstabilität der inneren Kammer und somit eine langfristige Schaltbarkeit resultieren.

Es ist bevorzugt, die erste und/oder die zweite Umhüllung aus einer Verbundfolie auszubilden. Insbesondere kann die Verbundfolie einen Zweischichtaufbau aus einer Metallschicht, insbesondere aus Aluminium, und einer Kunststoffschicht aufweisen. Alternativ kann die Verbundfolie eine Schichtabfolge von Metallschicht und Kunststoffschicht aufweisen, die sich mindestens einmal wiederholt. Weiterhin ist es zweckmäßig die Verbundfolie außenseitig mit einer Verstärkungsschicht aus einem Kunststoffmaterial zu versehen, z. B. PET.

Es ist bevorzugt, die erste, innere Umhüllung aus einer Verbundfolie mit Zweischichtaufbau und die zweite, äußere Umhüllung aus einer Verbundfolie mit Schichtabfolge auszubilden. Damit wird vorteilhaft die Ausbildung einer Wärmebrücke in der zweiten Umhüllung reduziert.

Das erfindungsgemäße Vakuumdämmelement wird zur Dämmung von Gebäuden als Bestandteil der Gebäudehülle eingesetzt. Auf der Außenseite des erfindungsgemäßen Vakuumdämmelements ist als Bestandteil der Gebäudehülle eine Absorberschicht angeordnet, die mit den Vakuumdämmelementen in thermischen Kontakt steht. Die Absorberschicht absorbiert die solare Einstrahlung und wandelt diese in Wärme um, vorzugsweise besteht diese Absorberschicht aus Kupfer-, Aluminium- oder Edelstahlblech, insbesondere beschichtet mit schwarzem Lack oder Low-e-Coating, oder wahlweise auch aus einem selektiv-beschichteten Absorberblech. Zur Reduzierung eines Wärmeverlusts durch Wärmestrahlung der Absorberschicht zur Umgebung ist eine transparente Schicht, üblicherweise aus Glas beabstandet angeordnet, die zugleich als Witterungsschutz dient und die außenseitige Schicht der Gebäudehülle ist. Ggf. kann auch innenseitig zwischen den erfindungsgemäßen Dämmelementen und der Wand eine wärmeverteilende Schicht vorgesehen sein, wie beispielsweise eine Graphit enthaltende Schicht, ein gut wärmeleitender Putz oder Wärmeleitpaste.

Aufgrund der Schaltbarkeit des erfindungsgemäßen Dämmelements eignet es sich insbesondere zur Nutzung solarer Energie. Weiterhin kann das Dämmelement auch dort zum Einsatz kommen, wo eine sommerliche Kühlung mit einer ungehinderten Wärmeabgabe aus dem Gebäudeinneren in die Umgebung angestrebt wird.

Unabhängiger Schutz wird beansprucht für ein Fassadenelement, wobei sich die zuvor beschriebene Gebäudehülle durch eine Vielzahl dieser Fassadenelemente in einfacher Art zusammensetzen lässt, und die Fassadenelemente den strukturellen Aufbau der Gebäudehülle aufweisen als Fertigelemente bereitgestellt werden. Die Fassadenelemente weisen eine Dämmschicht aus dem erfindungsgemäßen Vakuumdämmelement auf, an dem einseitig eine Absorberschicht angeordnet ist, insbesondere aus Kupfer-, Aluminium- oder Edelstahlblech, insbesondere beschichtet mit schwarzem Lack oder Low-e-Coating, oder aus einem selektiv-beschichteten Absorberblech, die ihrerseits von einer transparenten Schicht, üblicherweise aus Glas abgedeckt ist, welche zugleich als Witterungsschutz dient.

In einer bevorzugten Ausführung weist das Fassadenelement ein an der transparenten Schicht angeordnetes oder ein in dieser integriertes aktives Verschattungssystem auf, besonderes bevorzugt ist eine optisch schaltbare Schicht.

Weiterhin ist es bevorzugt, dass die Fassadenelemente rückseitig, d.h. auf der der transparenten Schicht gegenüberliegenden Fläche des Vakuumdämmelements eine wärmeverteilende Schicht aufweisen, wie beispielsweise eine Graphit enthaltende Schicht, ein gut wärmeleitender Putz oder eine Wärmeleitpaste.

Die Erfindung wird nachfolgend an Ausführungsbeispielen näher beschrieben, wobei gleiche Gegenstände mit gleichen Bezugszeichen gekennzeichnet sind. Es zeigen:
- Fig. 1: die Sigmoid-Kurve eines gasdruckabhängigen porösen Dämmmaterials
- Fig. 2: eine erste Ausführung eines erfindungsgemäßen Vakuumdämmelements
- Fig. 3: eine zweite Ausführung eines erfindungsgemäßen Vakuumdämmelements

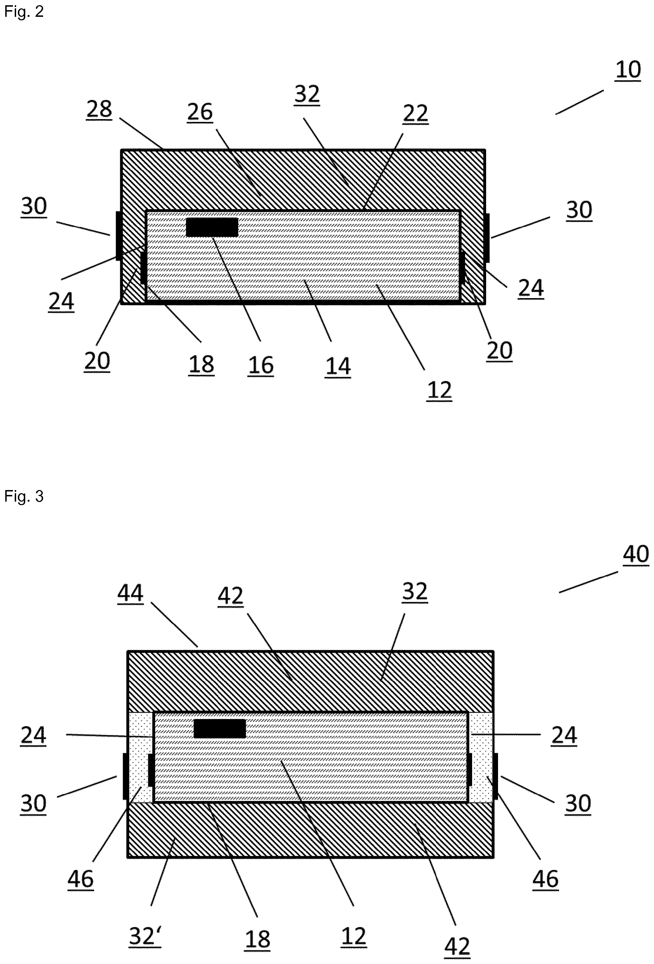

Fig. 2 zeigt eine erste Ausführung eines erfindungsgemäßen Vakuumdämmelements 10 in einer Schnittdarstellung. Das innere VIP 12 ist wie folgt ausgebildet. In ein grobporöses Glasfaservlies 14 mit im Ausführungsbeispiel mittleren Porengrößen von etwa 40 µm ist ein mit Gettermaterial gefülltes Heizelement 16 eingebracht. Das Glasfaservlies 14 ist mit einer Aluminiumverbundfolie 18 umhüllt. Die zwei nicht dargestellten Leistungsdrähte des Heizelementes 16 sind an der Siegelnaht 20 der Aluminiumverbundfolie 18 hindurch geführt und durch das Versiegeln fest verbunden. Während des fortschreitenden Evakuierprozesses bei der Herstellung des inneren VIP 12 wird der Getter durch Aufheizen auf eine Temperatur von 400°C in den entladenen Zustand gebracht. Anschließend findet der gesamte Siegelprozess für das innere VIP 12 unter reiner Wasserstoffatmosphäre statt. Der Gesamtgasdruck in der Vakuumkammer entspricht dabei einem Wert von 50 mbar Wasserstoff. Im Ausführungsbeispiel beträgt die Dicke des inneren VIP 12 unter Belastung bei Atmosphärendruck 25 mm.

An das quaderförmige innere VIP 12 liegt an einer, hier der oberen Großfläche 22 sowie an den 4 Seitenflächen 24 ein Mineralwollvlies 26 an. Dieser Aufbau wird von einer gasdichten dreilagigen metallisierten Verbundfolie 28 umhüllt. Die Dicke des Mineralwollevlieses beträgt unbelastet 10 mm und reduziert sich unter der Druckbelastung auf etwa 2,5 mm. Durch die Anordnung des Mineralwollevlieses 26 an den vier Seitenflächen 24 werden in diesem kritischen Bereich die beiden Umhüllungen, d.h. die Aluminiumverbundfolie 18 des inneren VIP 12 und die dreilagige Verbundfolie 28 vorteilhaft voneinander thermisch entkoppelt und damit Wärmebrückeneffekte reduziert. Die beiden Leitungsdrähte werden wie im Fall des inneren VIP 12 an der Siegelnaht 30 der dreilagige Verbundfolie 28 hindurch geführt und durch das Versiegeln fest verbunden. Das erfindungsgemäße Vakuumdämmelement 10 weist somit nur eine äußere Füllkammer 32 auf. Zur verdeutlichten Darstellung ist Fig. 2 (wie auch Fig. 3) absichtlich nicht maßstabsgerecht dargestellt. Sowohl die Siegelnaht 22 des inneren VIP 12 als auch die äußere Siegelnaht 30 sind an die jeweiligen Umhüllungen 18, 28 angelegt.

Der konkrete Ablauf der zweiten Evakuierung, d.h. des auf dem inneren VIP 12 angeordneten äußeren Füllmaterials 26, unterscheidet von der zuvor beschriebenen Evakuierung des inneren VIPs 12. Die luftgefüllte Kammer wird dabei auf einen vorgegeben Luft-Innendruck evakuiert, anschließend wird durch Zugabe von Wasserstoff ein Wasserstoff-Partialdruck von 26 mbar eingestellt und danach die äußere Hülle 22 gasdicht versiegelt. Der Gesamtinnendruck in der/den äußeren Füllkammern ergibt sich aus der Summe von Wasserstoff-Partialdruck und vorgegebenen Luft-Innendruck. Im beschriebenen Ausführungsbeispiel mit einem Wasserstoff-Partialdruck von 26 mbar gegenüber dem Wasserstoffinnendruck des inneren VIP 12 von 50 mbar im Entladungszustand, somit mit etwa halbierten Wasserstoff-Partialdruck, verlaufen die Diffusionsströme in den beiden Schaltzuständen gegenläufig und heben sich somit teilweise auf, woraus eine besonders hohe Ausgangsgasdruckstabilität der inneren Kammer und somit eine langfristige Schaltbarkeit resultieren.

Das erfindungsgemäße Vakuumdämmelement 40 gemäß Fig. 3 unterscheidet sich von dem Vakuumdämmelement 10 dahingehend, dass auf dem inneren VIP 12 auf beiden Großflächen ein Füllmaterial 42 in Form von metallisierten Polyesterfasern aufgebracht ist. Dieser Aufbau wird mit einer metallisierten Verbundfolie 44 umhüllt. Die vier schmalen Seitenflächen 24 werden mit einem makroporösen PU-Schaum 46 umgeben, der neben der thermischen Entkoppelung der beiden Umhüllungen 18, 44 an den Seitenflächen 24 vorteilhaft eine diffusive Entkoppelung der beiden äußeren Füllkammern 32 bewirkt, so dass kein Gasaustausch, insbesondere von Wasserstoffgas zwischen den beiden äußeren Füllkammern 32, 32' stattfindet. Die Dicke des PU-Schaumes 46 ist vorzugsweise so gewählt, dass sich unter atmosphärischer Belastung eine Dicke von etwa 0,2 mm bis 1 mm einstellt. In der Vakuumkammer wird ein Wasserstoff-Partialdruck von 26 mbar eingestellt und die äußere Hülle dann gasdicht versiegelt.

Im Ausführungsbeispiel nach Fig. 3 haben die äußeren Füllkammern eine gleiche Dicke, diese kann allerdings auch unterschiedlich gewählt sein.

Auch ist es möglich, die äußere Umhüllung in Form eines Glaskastens bzw. einer Glashülle auszuführen. Dabei sind die Leitungsdrähte an geeigneter Stelle gasdicht durch die Hülle zu führen, beispielsweise durch eine Glaslotverbindung der die Hülle formenden Scheiben.

## Patentansprüche

1. Vakuumdämmelement (10, 40) bestehend aus einer mit einer ersten Umhüllung (18) gasdicht umhüllten inneren Füllkammer und einer zweiten, äußeren gasdichten Umhüllung (28, 44) unter Ausbildung von einer oder zwei äußeren Füllkammern (32, 32'), in denen ein grobporöses oder grob strukturiertes Füllmaterial (26, 42) angeordnet ist, wobei der Gesamtgasdruck der äußeren Füllkammer (32, 32') größer oder gleich dem Gesamtgasdruck der inneren Füllkammer bei absorbierendem Getter ist, wobei die innere Füllkammer ein grobporöses oder grob strukturiertes Dämmmaterial (14), Wasserstoffgas und ein mit Gettermaterial gefülltes elektrisches Heizelement (16) zur Absorption und Desorption von Wasserstoff enthält, und eine schaltbare Wärmeleitfähigkeit aufweist.

2. Vakuumdämmelement nach Anspruch 1 **dadurch gekennzeichnet, dass** die erste (18) und die zweite Umhüllung (28, 44) im Bereich der Seitenflächen thermisch entkoppelt sind.

3. Vakuumdämmelement nach Anspruch 1 oder 2 **dadurch gekennzeichnet, dass** die äußere/n Füllkammer/n (32, 32') einen Wärmedurchgangskoeffizienten gemäß EN ISO 6946 größer 2 W/m²/K aufweist/aufweisen.

4. Vakuumdämmelement nach einem der Ansprüche 1 bis 3 **dadurch gekennzeichnet, dass** das äußere Füllmaterial (26, 42) ein Mineralfaser-, Mineralwolle- oder Polyestervlies ist.

5. Vakuumdämmelement nach einem der Ansprüche 1 bis 3 **dadurch gekennzeichnet, dass** das äußere Füllmaterial (26, 42) aus Metall-, Carbon- oder metallisierten Fasern gebildet ist.

6. Vakuumdämmelement nach einem der Ansprüche 1 bis 5 **dadurch gekennzeichnet, dass** die äußere Füllkammer (32, 32') mit Wasserstoffgas gefüllt ist.

7. Vakuumdämmelement nach Anspruch 6 **dadurch gekennzeichnet, dass** der Wasserstoffgas-Partialdruck der äußeren Füllkammer (32, 32') zwischen 5 mbar und 30 mbar beträgt, bevorzugt etwa dem halben Wasserstoff-Partialdruck der inneren Füllkammer entspricht.

8. Vakuumdämmelement nach einem der Ansprüche 1 bis 7 **dadurch gekennzeichnet, dass** die äußere Füllkammer (32, 32') mit Luft gefüllt ist und der Gesamtgasdruck zwischen 0,01 bar und 0,5 bar, bevorzugt 0,05 bar bis 0,2 bar beträgt.

9. Vakuumdämmelement nach einem der Ansprüche 1 bis 8 **dadurch gekennzeichnet, dass** die erste und/oder die zweite Umhüllung (18, 28, 44) aus einer Verbundfolie gebildet ist.

10. Vakuumdämmelement nach Anspruch 9 **dadurch gekennzeichnet, dass** die Verbundfolie einen Zweischichtaufbau aus einer Metallschicht, insbesondere aus Aluminium, und einer Kunststoffschicht aufweist.

11. Vakuumdämmelement nach Anspruch 9 **dadurch gekennzeichnet, dass** die Verbundfolie eine Schichtabfolge Metallschicht und Kunststoffschicht aufweist, die sich mindestens einmal wiederholt.

12. Vakuumdämmelement nach Anspruch 10 oder 11 **dadurch gekennzeichnet, dass** die Verbundfolie außenseitig eine Verstärkungsschicht aus einem Kunststoffmaterial aufweist.

13. Fassadenelement zur Nutzung des solaren Energieeintrags durch eine Gebäudehülle, aufweisend mindestens ein Vakuumdämmelement (10, 40) nach einem der Ansprüche 1 bis 12 mit einer einseitigen Absorberschicht, insbesondere aus Kupfer-, Aluminium- oder Edelstahlblech, insbesondere beschichtet mit schwarzem Lack oder Low-e-Coating, oder einem selektiv-beschichteten Absorberblech, die ihrerseits von einer transparenten Schicht, insbesondere aus Glas, abgedeckt ist.

14. Gebäudehülle aufweisend mindestens ein Vakuumdämmelement (10, 40) nach einem der Ansprüche 1 bis 12 und/oder mindestens ein Fassadenelement nach Anspruch 13.

## Claims

1. Vacuum insulation element (10, 40) consisting of an inner filling chamber surrounding a first casing (18) in a gas-tight manner, and a second outer gas-tight casing (28, 44), with the formation of one or two outer filling chambers (32, 32'), arranged in which is a coarse-pored or coarse-structured filling material (26, 42), wherein the total gas pressure of the outer filling chambers (32, 32') is greater than or equal to the total gas pressure of the inner filling chambers with absorbing getter, wherein the inner filling chamber contains a coarse-pored or coarse-structured insulating material (14), hydrogen gas, and an electrical heating element (16) filled with getter material for the absorption and desorption of hydrogen, and comprises a switchable thermal conductivity capacity.

2. Vacuum insulation element in accordance with claim 1, **characterized in that** the first (18) and the second casing (28, 44) are thermally detached in the region of the side surfaces.

3. Vacuum insulation element in accordance with claim 1 or 2, **characterized in that** the outer filling chambers (32, 32') exhibit a heat transfer coefficient in accordance with EN ISO 6946 greater than 2 W/m²/K.

4. Vacuum insulation element in accordance with any one of claims 1 to 3, **characterized in that** the outer filling material (26, 42) is a mineral fibre, mineral wool, or polyester non-woven material.

5. Vacuum insulation element in accordance with any one of claims 1 to 3, **characterized in that** the outer filling material (26, 42) is formed from metal fibres, carbon fibres, or metallised fibres.

6. Vacuum insulation element in accordance with any one of claims 1 to 5, **characterized in that** the outer filling chamber (32, 32') is filled with hydrogen gas.

7. Vacuum insulation element in accordance with claim 6, **characterized in that** the hydrogen gas partial pressure of the outer filling chamber (32, 32') amounts to between 5 mbar and 30 mbar, preferably about half the hydrogen partial pressure of the inner filling chamber.

8. Vacuum insulation element in accordance with any one of claims 1 to 7, **characterized in that** the outer filling chamber (32, 32') is filled with air, and the total pressure is between 0.01 bar and .5 bar, and preferably 0.05 bar to 0.2 bar.

9. Vacuum insulation element in accordance with any one of claims 1 to 8, **characterized in that** the first and/or the second casing (18, 28, 44) is formed from a composite film.

10. Vacuum insulation element in accordance with claim 9, **characterized in that** the composite film compromises a two-layer structure of a metal layer, in particular of aluminium and a plastic layer.

11. Vacuum insulation element in accordance with claim 9, **characterized in that** the composite film comprises a layer sequence of metal layer and plastic layer, which repeats at least once.

12. Vacuum insulation element in accordance with claim 10 or 11, **characterized in that** the composite film comprises on the outside a reinforcement layer of a plastic material.

13. Façade element for the use of the solar energy input through a building casing, comprising at least one vacuum insulation element (10, 40) in accordance with any one of claims 1 to 12, with a one-side absorber layer, in particular coated with a black paint or low-e coating, or with a selective-coated absorber plate, which in turn is covered by a transparent layer, in particular of glass.

14. Building casing comprising at least one vacuum insulation element (10, 40) in accordance with any one of claims 1 to 12, and/or at least one façade element in accordance with claim 13.

## Revendications

1. Élément d'isolation sous vide (10, 40) constitué d'une première chambre de remplissage intérieure entourée de manière étanche au gaz par une première enveloppe (18) et d'une deuxième enveloppe (28, 44) extérieure étanche au gaz formant une ou deux chambres de remplissage (32, 32') extérieures dans lesquelles est disposé un matériau de remplissage (26, 42) à gros pores ou à grosses structures, dans lequel la pression totale du gaz de la chambre de remplissage (32, 32') extérieure est supérieure ou identique à la pression totale du gaz de la chambre de remplissage intérieur en cas de getter absorbant, dans lequel la chambre de remplissage intérieure contient un matériau d'isolation (14) à gros pores ou à grosses structures, de l'hydrogène gazeux et un élément de chauffage (16) électrique rempli de matériau getter destiné à l'absorption et à la désorption de l'hydrogène, et présente une conductivité thermique commutable.

2. Élément d'isolation sous vide selon la revendication 1, **caractérisé en ce que** la première (18) et la deuxième enveloppe (28, 44) sont découplées thermiquement dans la zone des surfaces latérales.

3. Élément d'isolation sous vide selon la revendication 1 ou 2, **caractérisé en ce que** la ou les chambre(s) de remplissage (32, 32') extérieure(s) présente(nt) un coefficient de transmission thermique d'après la norme EN ISO 6946 supérieur à 2 W/m²/K.

4. Élément d'isolation sous vide selon l'une des revendications 1 à 3, **caractérisé en ce que** le matériau de remplissage (26, 42) extérieur est un voile de fibres minérales, de laine minérale ou de polyester.

5. Élément d'isolation sous vide selon l'une des revendications 1 à 3, **caractérisé en ce que** le matériau de remplissage (26, 42) extérieur est formé à partir de fibres de métal, de carbone ou métallisées.

6. Élément d'isolation sous vide selon l'une des revendications 1 à 5, **caractérisé en ce que** la chambre de remplissage (32, 32') extérieure est remplie d'hydrogène gazeux.

7. Élément d'isolation sous vide selon la revendication 6, **caractérisé en ce que** la pression partielle d'hydrogène gazeux de la chambre de remplissage (32, 32') extérieure est comprise entre 5 mbar et 30 mbar, correspond de préférence à la moitié de la pression partielle d'hydrogène de la chambre de remplissage intérieure.

8. Élément d'isolation sous vide selon l'une des revendications 1 à 7, **caractérisé en ce que** la chambre de remplissage (32, 32') extérieure est remplie d'air et que la pression totale de gaz est comprise entre 0,01 bar et 0,5 bar, est de préférence de 0,05 bar à 0,2 bar.

9. Élément d'isolation sous vide selon l'une des revendications 1 à 8, **caractérisé en ce que** la première et/ou la deuxième enveloppe (18, 28, 44) est formée à partir d'une feuille composite.

10. Élément d'isolation sous vide selon la revendication 9, **caractérisé en ce que** la feuille composite présente une structure bicouches composée d'une couche de métal, en particulier d'aluminium, et d'une couche de plastique.

11. Élément d'isolation sous vide selon la revendication 9, **caractérisé en ce que** la feuille composite présente une succession de couche de métal et couche de plastique qui se répète au moins une fois.

12. Élément d'isolation sous vide selon la revendication 10 ou 11, **caractérisé en ce que** la feuille composite présente du côté extérieur une couche de renforcement composée d'un matériau plastique.

13. Élément de façade pour l'utilisation d'un apport d'énergie solaire par une gaine de bâtiment, présentant au moins un élément d'isolation sous vide (10, 40) selon l'une des revendications 1 à 12, comportant une couche d'absorbant unilatérale, en particulier en tôle de cuivre, d'aluminium ou d'acier inoxydable, revêtue en particulier de peinture noire ou d'un revêtement à faible émissivité, ou d'une tôle d'absorbant revêtue de manière sélective, qui est recouverte à son tour d'une couche transparente, en particulier en verre.

14. Gaine de bâtiment, comportant au moins un élément d'isolation sous vide (10, 40) selon l'une des revendications 1 à 12 et/ou au moins un élément de façade selon la revendication 13.
